# EUROPEAN PATENT APPLICATION

(11) **EP 4 574 303 A1**
(43) Date of publication of application: **25.06.2025**
(21) Application number: 23853970.4
(22) Date of filing: 09.05.2023
(51) Int. Cl.: B22D 11/00, B22D 11/12, B22D 11/124

(54) **HIGH-CARBON STEEL WIRE ROD AND PRODUCTION METHOD THEREFOR**

(30) Priority: 16.08.2022 CN 202210977794
(71) Applicant: Institute of Research of Iron and Steel, Jiangsu Province/Sha-Steel, Co. Ltd (CN), Suzhou, Jiangsu 215625 (CN); Zhangjiagang Rongsheng Special Steel Co. Ltd., Suzhou, Jiangsu 215625 (CN); Jiangsu Shagang Group Co., Ltd., Suzhou, Jiangsu 215625 (CN)
(72) Inventor: MA, Jianchao, Suzhou, Jiangsu 215625 (CN); SHEN, Kui, Suzhou, Jiangsu 215625 (CN); MA, Han, Suzhou, Jiangsu 215625 (CN); LI, Qiang, Suzhou, Jiangsu 215625 (CN)
(74) Representative: Gille Hrabal Partnerschaftsgesellschaft mbB Patentanwälte
(86) International application number: PCT/CN2023/093049
(87) International publication number: WO 2024/037063

(57) **Abstract**

The present invention provides a a high carbon steel wire coil and a production method therefor. The method comprises: smelting to obtain molten steel; continuously casting the molten steel to obtain a continuous casting bloom, and performing a reduction with reduction rate that is first high, then low, and then high applied to the continuous casting bloom during continuous casting; heating the continuous casting bloom and then performing blooming to obtain a billet; heating the billet and then performing rolling and air cooling to obtain the wire coil. By finely controlling the dynamic soft reduction parameters during continuous casting, and a reduction with reduction rate that is first high, then low, and then high applied to the continuous casting bloom, the present invention significantly improves the segregation and porosity issues in the central region of the bloom from the source.

## Description

### TECHNICAL FIELD

The present application relates to the technical field of alloy technology, specifically to a high carbon steel wire coil and a production method therefor.

### BACKGROUND

High carbon steel wire is widely used in various industries of the national economy, such as various steel wire ropes, bridge cables, galvanized steel wires, and tire skeleton materials. As an important category of high carbon steel, cord steel is mainly used to produce skeleton materials for automotive radial tires. In recent years, with the rise of new energy vehicles and the requirement for low carbon emissions, high strength has become the main development direction for steel cords. Increasing strength not only reduces the use of steel cord wires but also decreases the use of rubber materials. For high strength steel cords, increasing carbon content and adding micro-alloying elements are typically used. However, as carbon content increases, controlling the microstructure and properties of the wire coil becomes more challenging, especially the control of grain boundary cementite. Therefore, a holistic approach from continuous casting to rolling is needed to mitigate the impact of grain boundary cementite.

### SUMMARY

The object of the present application is to provide a high carbon steel wire coil and a production method therefor.

The present application provides a method for producing high carbon steel wire coil, wherein the carbon content of the wire coil is 0.8% and above by mass percentage, the method comprising:
smelting to obtain molten steel;
continuously casting the molten steel to obtain a continuous casting bloom, wherein soft reduction is performed on the continuous casting bloom during continuous casting, the soft reduction comprising: when the central solid fraction fs of the continuous casting bloom is 0.3 ≤fs<0.5, performing a reduction on the continuous casting bloom with a reduction rate of 3~5 mm/m, to form negative segregation in the center of the continuous casting bloom; when the central solid fraction fs of the continuous casting bloom is 0.5≤fs<0.8, reducing the reduction rate and performing a reduction on the continuous casting bloom with a reduction rate of 2~4 mm/m; when the central solid fraction fs of the continuous casting bloom is 0.8 ≤ fs≤1, increasing the reduction rate and performing a reduction on the continuous casting bloom with a reduction rate of 4~6 mm/m;
heating the continuous casting bloom and then performing blooming to obtain a billet;
heating the billet and then performing rolling and air cooling to obtain the wire coil.

As a further improvement of the present application, when the central solid fraction fs of the continuous casting bloom is 0.3≤fs<0.5, performing a reduction on the continuous casting bloom with a reduction rate of 3~5 mm/m to form negative segregation in the center of the continuous casting bloom, specifically comprising:
when the central solid fraction fs of the continuous casting bloom is 0.3 ≤fs<0.5, performing a multi-stage reduction on the continuous casting bloom within the range of a reduction rate of 3~5 mm/m, with the reduction rate gradually decreasing.

As a further improvement of the present application, the soft reduction on the continuous casting bloom during continuous casting specifically comprises:
performing soft reduction on the continuous casting bloom in the horizontal section of the continuous casting machine by sequentially passing the continuous casting bloom through eight withdrawal straighteners, wherein the eight withdrawal straighteners are numbered from one to eight, and when the central solid fraction fs of the continuous casting bloom is 0.3≤ fs<0.5, performing reduction on the continuous casting bloom through the first to the third withdrawal straighteners with the reduction rate of the first to the third withdrawal straighteners controlled to decrease sequentially; when the central solid fraction fs of the continuous casting bloom is 0.5≤fs<0.8, performing reduction on the continuous casting bloom through the fourth to the sixth withdrawal straighteners; when the central solid fraction fs of the continuous casting bloom is 0.8≤fs≤1, performing reduction on the continuous casting bloom through the seventh and the eighth withdrawal straighteners.

As a further improvement of the present application, the reduction rate of the first withdrawal straightener is controlled to be 4~5 mm/m, the reduction rate of the second withdrawal straightener is controlled to be 3~5 mm/m, the reduction rate of the third withdrawal straightener is controlled to be 3~4 mm/m, the reduction rate of the fourth to the sixth withdrawal straighteners is controlled to be 2~4 mm/m, and the reduction rate of the seventh and the eighth withdrawal straighteners is controlled to be 4~6 mm/m.

As a further improvement of the present application, the step of continuously casting the molten steel to obtain a continuous casting bloom further comprises:
performing electromagnetic induction heating on the molten steel in the tundish, with the superheat controlled to be 10~20°C, and after the molten steel enters the mould through the tundish, performing electromagnetic stirring with a stirring current controlled to be 400~600A and a frequency of 3~5Hz.

As a further improvement of the present application, the step of continuously casting the molten steel to obtain a continuous casting bloom further comprises:
performing continuous casting using a continuous casting machine with a cross-sectional size of 300mm × 400mm, with the casting speed controlled to be 0.65~0.75 m/min, and the specific water ratio in the secondary cooling zone of the continuous casting machine controlled to be 0.15~0.25 L/kg.

As a further improvement of the present application, after continuously casting the molten steel to obtain a continuous casting bloom, the method further comprising:
after obtaining the continuous casting bloom by continuous casting, loading the continuous casting bloom with a surface temperature greater than 800°C into a holding pit and holding for more than 72 hours.

As a further improvement of the present application, the step of heating the continuous casting bloom and then performing blooming to obtain a billet specifically comprises:
heating the continuous casting bloom in a heating furnace, with the soaking zone temperature in the heating furnace controlled to be 1130~1180°C, and the time in the furnace of the continuous casting bloom controlled to be 240~300 min.

As a further improvement of the present application, the step of heating the billet and then performing rolling and air cooling to obtain the wire coil specifically comprises:
heating the billet in a heating furnace before rolling, with the soaking zone temperature in the heating furnace controlled to be 1080~1120°C, controlling the temperature of the billet at the entry of the finishing mill to be 860~890°C, controlling the water box pressure in the finishing mill to be 3~4 bar, controlling the water flow rate to be 1100~1200 m³/h, controlling the winding temperature to be 840~850°C, and rolling the billet to obtain a wire coil with a diameter of 5.0~5.5 mm.

As a further improvement of the present application, the step of heating the billet and then performing rolling and air cooling to obtain the wire coil further comprises:
after rolling, turning on the first to the third fans to cool the wire coil, with the air volume of the fans controlled to be 30~100%.

As a further improvement of the present application, the step of smelting to obtain molten steel specifically comprises:
sequentially performing hot metal pre-desulfuration, BOF smelting or electric furnace smelting, and LF furnace refining to obtain molten steel.

The present application also provides a high carbon steel wire coil, wherein the wire coil is manufactured by the method for producing high carbon steel wire coil described above.

As a further improvement of the present application, when the carbon content of the wire coil is 0.8~0.9% by mass percentage, the network cementite rating within the wire coil is 0 under the YB-T4002-2013 standard, and when the carbon content of the wire coil is more than 0.9% by mass percentage, the network cementite rating within the wire coil is 1 under the YB-T4002-2013 standard.

Advantageous effects of the present invention are as follows: by finely controlling the dynamic soft reduction parameters during continuous casting, and a reduction with reduction rate that is first high, then low, and then high applied to the continuous casting bloom, with the central solid fraction of the continuous casting bloom ranging from 0.3 to 1.0, the present application significantly improves the segregation and porosity issues in the central region of the bloom from the source, and significantly reduces the network cementite within the wire coil by coordinating parameters controlling in the subsequent blooming, rolling, and cooling processes.

### BRIEF DESCRIPTION OF THE DRAWINGS

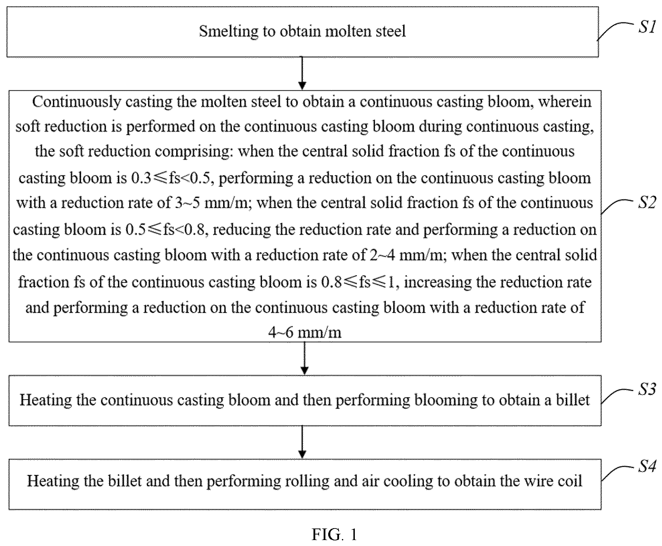

FIG. 1 is a schematic diagram of the steps in the method for producing high carbon steel wire coil and the wire coil itself according to one embodiment of the present application.

### DETAILED DESCRIPTION

To make the objectives, technical solutions, and advantages of the present application clearer, the following detailed description of the embodiments of the present application, along with the accompanying drawings, is provided. It is evident that the described embodiments are only a part of the embodiments of the present application and not all of them. All other embodiments obtained by a person of ordinary skill in the art without creative efforts based on the embodiments of the present application fall within the protection scope of the present application.

The following detailed description of the embodiments of the present application is provided. Examples of the embodiments are shown in the drawings, where the same or similar reference numerals represent the same or similar elements or elements with the same or similar functions throughout. The embodiments described below with reference to the drawings are exemplary and are used to explain the present application, but should not be construed as limiting the present application.

The embodiment provides a high carbon steel wire coil and the production method therefor, wherein the carbon content of the wire coil is 0.8% and above by mass percentage. The method mainly controls the dynamic soft reduction parameters in the continuous casting process, thereby controlling the segregation index (carbon content in the center of the bloom / smelting carbon content) of the continuous casting bloom within the range of 0.9~1.0. By controlling the parameters in the blooming and rolling processes, the network cementite in the core of the wire coil is effectively reduced. The steel wire coil produced is particularly suitable for use as cord steel.

As shown in Figure 1, the method comprises:
S1: Smelting to obtain molten steel.
S2: Continuously casting the molten steel to obtain a continuous casting bloom, wherein soft reduction is performed on the continuous casting bloom during continuous casting, the soft reduction comprising: when the central solid fraction fs of the continuous casting bloom is 0.3≤fs<0.5, performing a reduction on the continuous casting bloom with a reduction rate of 3~5 mm/m; when the central solid fraction fs of the continuous casting bloom is 0.5≤ fs<0.8, reducing the reduction rate and performing a reduction on the continuous casting bloom with a reduction rate of 2~4 mm/m; when the central solid fraction fs of the continuous casting bloom is 0.8≤fs≤1, increasing the reduction rate and performing a reduction on the continuous casting bloom with a reduction rate of 4~6 mm/m.
S3: Heating the continuous casting bloom and then performing blooming to obtain a billet.
S4: Heating the billet and then performing rolling and air cooling to obtain the wire coil.

In step S1, the process sequentially includes the following steps: hot metal pre-desulfuration, BOF smelting, and LF furnace refining.

In the process of hot metal pre-desulfuration, mechanical stirring is applied to the hot metal, and lime powder and fluorite are sprayed into the molten iron to perform desulfuration. The sulfur content in the molten iron is controlled. After removing the desulfuration slag, the molten iron is charged into the furnace for smelting.

In the process of BOF smelting or electric furnace smelting, pre-desulfurized hot metal and scraps are used as raw materials to obtain molten steel. During the smelting process, oxygen is blowed to the hot metal and the temperature of the hot metal is raised, followed by decarburization and dephosphorization to obtain molten steel.

In the process of LF furnace refining, the molten steel undergoes degassing, alloying and temperature control to obtain molten steel with the required temperature and composition.

In step S2, the process specifically includes:
S21: The molten steel is heated in the tundish. After being distributed through the tundish, the molten steel enters the mould to form a shell of a certain thickness. The continuous casting bloom, with the shell formed, is pulled by withdrawal straighteners and enters the secondary cooling zone for water spray cooling.

Specifically, in this embodiment, the molten steel is heated by electromagnetic induction in the tundish, with the superheat controlled to be 10~20°C. After entering the mould through the tundish, electromagnetic stirring is performed with a stirring current controlled to be 400~600A and a frequency of 3~5Hz.

In the tundish, electromagnetic induction heating drives the rotation of the molten steel, causing inclusions in the molten steel to migrate inward and collide under the centrifugal force, accelerating their rise to form a top slag. The purified molten steel enters the nozzle from the bottom of the tundish and then enters the mould, effectively reducing inclusions in the molten steel and thus minimizing segregation caused by inclusion elements during subsequent solidification. Electromagnetic stirring in the mould enhances the convection, heat transfer, and mass transfer processes within the liquid pool of the shell, thereby controlling the solidification process of the continuous casting bloom. This effectively eliminates superheat, improves the solidification structure of the continuous casting bloom, and reduces segregation.

In this embodiment, continuous casting is performed using a continuous casting machine with a cross-sectional size of 300mm × 400mm to obtain a slab. The casting speed is controlled to be 0.65~0.75 m/min, and the specific water ratio in the secondary cooling zone of the continuous casting machine is controlled to be 0.15~0.25 L/kg.

S22: After passing through the secondary cooling zone and the air cooling zone, soft reduction is performed on the continuous casting bloom in the horizontal section of the continuous casting machine by sequentially passing the continuous casting bloom through eight withdrawal straighteners. The eight withdrawal straighteners are numbered from one to eight. When the central solid fraction fs of the continuous casting bloom is 0.3≤fs<0.5, reduction is performed on the continuous casting bloom through the first to the third withdrawal straighteners, with the reduction rate of the first to the third withdrawal straighteners controlled to decrease sequentially, forming negative segregation in the center of the billet. When the central solid fraction fs of the continuous casting bloom is 0.5≤fs<0.8, reduction is performed on the continuous casting bloom through the fourth to the sixth withdrawal straighteners. When the central solid fraction fs of the continuous casting bloom is 0.8≤fs≤ 1, reduction is performed on the continuous casting bloom through the seventh and the eighth withdrawal straighteners.

During continuous casting, when the liquid volume decreases due to solidification shrinkage in the mushy zone at the end of solidification, a local pressure drop is formed. This pressure drop causes the liquid steel enriched with segregation elements between dendrites in the center of the continuous casting bloom to flow, accumulate, and eventually solidify, forming central segregation. Insufficient volume compensation results in central porosity. Dynamic soft reduction technology can effectively improve the flow and uniformity of the central liquid steel, reduce segregation and porosity caused by dendrite interlocking during solidification, and compensate for the volume shrinkage of liquid steel enriched with segregation elements during solidification.

Specifically, in this embodiment, when the central solid fraction fs of the continuous casting bloom is 0≤fs<0.3, no soft reduction is performed. The solidification shrinkage of the liquid steel in this region can be compensated by the flow of liquid steel in the front section. Therefore, the flow of liquid steel in this region will not cause central segregation but will instead homogenize the solute distribution in this region. Hence, no soft reduction is applied at this stage.

When the central solid fraction fs of the continuous casting bloom is 0.3≤fs<0.5, the reduction rate of the first withdrawal straightener is controlled to be 4~5 mm/m, the reduction rate of the second withdrawal straightener is controlled to be 3~5 mm/m, and the reduction rate of the third withdrawal straightener is controlled to be 3~4 mm/m. At this stage, the central liquid steel of the continuous casting bloom has good fluidity. A larger reduction rate will cause the high-solute-concentration liquid steel in the center of the continuous casting bloom to flow at a higher speed in the direction opposite to the casting direction, redistributing the solute elements in the liquid steel and is beneficial to forming negative segregation in the core of the continuous casting bloom. Negative segregation refers to segregation with a concentration lower than the average concentration of solute in the alloy. By first applying a large reduction rate, the central liquid steel of the continuous casting bloom is subjected to a large compressive force, causing the liquid steel to flow from the center of the continuous casting bloom to one side, while the solidification direction is from one side to the center of the continuous casting bloom. The opposite directions of flow and solidification help forming negative segregation in the center of the continuous casting bloom. By applying a large reduction force, the dendrites near the center of the continuous casting bloom can be detached along the reduction direction. The detached dendrites flow with the liquid steel to the core of the continuous casting bloom, where they act as nucleation sites, causing the central part of the continuous casting bloom to solidify first. The solidification direction is from the core of the billet to one side, and the direction of liquid steel flow is opposite to the solidification direction, which also helps to form negative segregation in the center of the continuous casting bloom. By forming negative segregation, the segregation in the central region of the continuous casting bloom is significantly reduced. To avoid excessive reduction that could cause internal cracks in the continuous casting bloom, the reduction rate of the first withdrawal straightener is controlled to be 4~5 mm/m, and the reduction rates of the second and the third withdrawal straighteners are gradually decreased.

When the central solid fraction fs of the continuous casting bloom is 0.5≤fs<0.8, the reduction rate of the fourth to the sixth withdrawal straighteners is controlled to be 2~4 mm/m. In this range, a smaller reduction rate can compensate for solidification shrinkage and thermal shrinkage while preventing upstream liquid steel from flowing in and re-forming segregation.

When the central solid fraction fs of the continuous casting bloom is 0.8≤fs≤1.0, the reduction rate of the seventh and the eighth withdrawal straighteners is controlled to be 4~6 mm/m. At the end of the solidification stage, a larger reduction rate is applied again to increase the density of the central region of the continuous casting bloom, eliminating central shrinkage cavities and reducing central spot segregation.

In other embodiments of the present application, the number of withdrawal straighteners and the specific reduction rates of each leveler can be adjusted based on the steel grade and the size of the continuous casting bloom, as long as the overall reduction rate of the withdrawal straighteners forms a gradient curve that first increases, then decreases, and then increases as described above.

S23: After obtaining the continuous casting bloom, loading the continuous casting bloom with a surface temperature controlled greater than 800°C into a holding pit and holding for more than 72 hours.

In the holding pit, the continuous casting bloom is slowly cooled, effectively reducing the surface temperature gradient of the continuous casting bloom, preventing an increase in transformation stress, and reducing surface microcracks and central segregation defects, thereby further improving the quality of the continuous casting bloom.

In other embodiments of the present application, the holding time in the holding pit can be adjusted based on the size of the continuous casting bloom.

In summary, by finely controlling the reduction rate during the dynamic soft reduction process to form a gradient curve that first increases, then decreases, and then increases, the central segregation and porosity of the continuous casting bloom are effectively reduced. Samples of the continuous casting bloom are taken, and according to YB-T 4002-2013 "Standard diagrams for macrostrusture and defects in continuous casting blooms", the low-magnification intermediate cracks are rated, and the central segregation value of the continuous casting bloom is analyzed by drilling. The segregation index of the continuous casting bloom produced by this method can be controlled within 0.9~1.0, and the central porosity level can be controlled below 0.5.

The step S3 specifically comprises:
The continuous casting bloom is heated in a heating furnace, with the soaking zone temperature in the heating furnace controlled to be 1130~1180°C, and the time in the furnace of the continuous casting bloom controlled to be 240~300 min.

The step S4 specifically comprises:
The billet is ground and inspected for defects before being placed in a heating furnace for heating. The soaking zone temperature in the heating furnace is controlled to be 1080~1120°C. The temperature of the billet at the entry of the finishing mill is controlled to be 860~890°C, the water box pressure in the finishing mill is controlled to be 3~4 bar, the water flow rate is controlled to be 1100~1200 m³/h, the winding temperature is controlled to be 840~850°C, and the billet is rolled to obtain a wire coil with a diameter of 5.0~5.5 mm.

After rolling, the first to the third fans are turned on to cool the wire coil, with the air volume of the fans controlled to be 30~100%.

In steps S3 and S4, the temperature parameters in the blooming and rolling processes are regulated to gradually reduce the temperature of the rolled billet. This increases the deformation stored energy of the rolled billet, refines the austenite grain size, and increases the proportion of grain boundaries in the rolled billet, thereby creating conditions for controlling the precipitation of network cementite in the wire coil. Ultimately, the number of network cementite in the core of the wire coil is effectively reduced, and the microstructure uniformity of the wire coil is improved. Compared to existing processes, this method, by controlling central segregation during continuous casting, does not require higher temperatures in the rolling and cooling processes than conventional processes to effectively control the formation of network cementite.

This embodiment also provides a high carbon steel wire coil manufactured by the method described above.

When the carbon content of the wire coil is 0.8~0.9% by mass percentage, the network cementite rating within the wire coil is 0 under the YB-T4002-2013 standard. When the carbon content of the wire coil is more than 0.9% by mass percentage, the network cementite rating within the wire coil is 1 under the YB-T4002-2013 standard.

When the wire coil is manufactured to steel cords with a diameter of 0.15~0.25 mm, the breakage ratio is 2~3 times per ton, which is more than 20% lower than that of existing wire coils.

In summary, by finely controlling the dynamic soft reduction parameters during continuous casting, and a reduction with reduction rate that is first high, then low, and then high applied to the continuous casting bloom, with the central solid fraction of the continuous casting bloom ranging from 0.3 to 1.0, the embodiment significantly improves the segregation and porosity issues in the central region of the billet from the source, and significantly reduces the network cementite within the wire coil by coordinating parameters controlling in the subsequent blooming, rolling, and cooling processes.

A specific embodiment of the present invention will be introduced below by way of six examples.

Examples 1~6 are produced using the following steps.

Smelting to obtain molten steel, transporting the steel ladle to the continuous casting platform for protective pouring. The carbon content of the steel in Examples 1~6 is shown in Table 1.

**[Table 1]**

| Steel type | Carbon content (%) | Furnace number | Cross-sectional size of continuous casting machine (mm×mm) |
|---|---|---|---|
| LX82A | 0.80 | (a) | 300×400 |
| | 0.82 | (b) | |
| | 0.84 | (c) | |
| LX92A | 0.90 | (d) | |
| | 0.92 | (e) | |
| | 0.94 | (f) | |

The molten steel forms a shell of a certain thickness in the mould and is pulled by withdrawal straighteners and then enters the secondary cooling zone for water spray cooling. The casting speed, superheat of tundish, electromagnetic stirring parameters of mould, and specific water ratio in the secondary cooling zone are shown in Table 2.

**[Table 2]**

| Furnace number | Casting speed (m/min) | Superheat (°C) | Stirring current (A) | Stirring frequency (Hz) | Specific water ratio in the secondary cooling zone (L/kg) |
|---|---|---|---|---|---|
| (a) | 0.65 | 20 | 600 | 3 | 0.15 |
| (b) | 0.70 | 15 | 500 | 4 | 0.20 |
| (c) | 0.75 | 10 | 400 | 5 | 0.25 |
| (d) | 0.65 | 20 | 600 | 3 | 0.15 |
| (e) | 0.70 | 15 | 500 | 4 | 0.20 |
| (f) | 0.75 | 10 | 400 | 5 | 0.25 |

The continuous casting bloom passes through the secondary cooling zone and air cooling zone, then enters the soft reduction zone for reduction treatment. The central solid fraction fs of the continuous casting bloom corresponding to each withdrawal straightener is shown in Table 3, and the reduction rates corresponding to each withdrawal straightener are shown in Table 4.

**[Table 3]**

| Furnace number | 1# | 2# | 3# | 4# | 5# | 6# | 7# | 8# |
|---|---|---|---|---|---|---|---|---|
| (a) | 0.31 | 0.36 | 0.43 | 0.51 | 0.60 | 0.70 | 0.82 | 0.96 |
| (b) | 0.33 | 0.38 | 0.45 | 0.53 | 0.62 | 0.72 | 0.84 | 0.98 |
| (c) | 0.35 | 0.40 | 0.47 | 0.55 | 0.64 | 0.74 | 0.86 | 1.00 |
| (d) | 0.30 | 0.35 | 0.42 | 0.50 | 0.59 | 0.69 | 0.81 | 0.95 |
| (e) | 0.32 | 0.37 | 0.44 | 0.52 | 0.61 | 0.71 | 0.83 | 0.97 |
| (f) | 0.34 | 0.39 | 0.46 | 0.54 | 0.63 | 0.73 | 0.85 | 1.00 |

**[Table 4]**

| Furnace number | 1# (mm/m) | 2# (mm/m) | 3# (mm/m) | 4# (mm/m) | 5# (mm/m) | 6# (mm/m) | 7# (mm/m) | 8# (mm/m) |
|---|---|---|---|---|---|---|---|---|
| (a) | 4 | 3 | 3 | 2 | 2 | 2 | 4 | 4 |
| (b) | 5 | 4 | 3 | 3 | 3 | 3 | 5 | 5 |
| (c) | 5 | 5 | 4 | 4 | 4 | 4 | 6 | 6 |
| (d) | 4 | 3 | 3 | 2 | 2 | 2 | 4 | 4 |
| (e) | 5 | 4 | 3 | 3 | 3 | 3 | 5 | 5 |
| (f) | 5 | 5 | 4 | 4 | 4 | 4 | 6 | 6 |

After the continuous casting bloom is off-line, it is transported to a holding pit for cooling. The surface temperature of the the continuous casting bloom entering the pit and the cooling time are shown in Table 5.

**[Table 5]**

| Furnace number | Surface temperature of the the bloom (°C) | Cooling time (h) |
|---|---|---|
| (a) | 820 | 72 |
| (b) | 860 | 75 |
| (c) | 900 | 78 |
| (d) | 800 | 72 |
| (e) | 840 | 75 |
| (f) | 880 | 78 |

Taking macrostructure samples of the continuous casting bloom, and rating the half-way cracks of the continuous casting bloom according to YB-T 4002-2013 "Standard diagrams for macrostrusture and defects in continuous casting blooms", drilling and analyzing the central segregation index of the continuous casting bloom. The results are shown in Table 6.

**[Table 6]**

| Furnace number | Central segregation index of the continuous casting bloom | Central porosity level of the continuous casting bloom |
|---|---|---|
| (a) | 0.98 | 0 |
| (b) | 0.94 | 0 |
| (c) | 0.90 | 0.5 |
| (d) | 1.00 | 0 |
| (e) | 0.96 | 0 |
| (f) | 0.92 | 0.5 |

The continuous casting bloom is transported to the blooming workshop and placed in a heating furnace. The soaking zone temperature in the heating furnace and the time in the furnace are shown in Table 7. The size of the billet is 140mm × 140mm.

**[Table 7]**

| Furnace number | Soaking zone temperature in the heating furnace, °C | Time in the furnace, min |
|---|---|---|
| (a) | 1130 | 240 |
| (b) | 1150 | 270 |
| (c) | 1180 | 300 |
| (d) | 1130 | 240 |
| (e) | 1150 | 270 |
| (f) | 1180 | 300 |

The billet is ground, inspected for defects, and then transported to the rolling workshop and placed in a heating furnace. The parameters of rolling process are shown in Table 8.

**[Table 8]**

| Furnace number | (a) | (b) | (c) | (d) | (e) | (f) |
|---|---|---|---|---|---|---|
| Soaking zone temperature (°C) | 1080 | 1100 | 1120 | 1080 | 1100 | 1120 |
| Temperature at the entry of the finishing mill (°C) | 860 | 875 | 890 | 860 | 875 | 890 |
| Water box pressure in the finishing mill (bar) | 3.0 | 3.5 | 4.0 | 3.0 | 3.5 | 4.0 |
| Water flow rate of the finishing mill (m³/h) | 1100 | 1150 | 1200 | 1100 | 1150 | 1200 |
| Winding temperature (°C) | 840 | 845 | 850 | 840 | 845 | 850 |
| Air volume of fan 1# (%) | 100 | 100 | 100 | 100 | 100 | 100 |
| Air volume of fan 2# (%) | 80 | 95 | 95 | 100 | 100 | 100 |
| Air volume of fan 3# (%) | 30 | 30 | 50 | 50 | 50 | 50 |
| Diameter (mm) | 5.0 | 5.0 | 5.0 | 5.5 | 5.5 | 5.5 |

Samples of the wire coil are taken, etched with nitric acid alcohol solution, and observed under a metallographic microscope. The results are shown in Table 9.

**[Table 9]**

| Furnace number | Level of network cementite rating |
|---|---|
| (a) | 0 |
| (b) | 0 |
| (c) | 0 |
| (d) | 0 |
| (e) | 0 |
| (f) | 1 |

The wire coil is manufactured to steel cords with various diameters. The breakage ratio is shown in Table 10.

**[Table 10]**

| Furnace number | Diameter of steel cord (mm) | Breakage ratio (times per ton) |
|---|---|---|
| (a) | 0.175 | 2.2 |
| (b) | 0.20 | 2.3 |
| (c) | 0.22 | 2.2 |
| (d) | 0.175 | 2.5 |
| (e) | 0.15 | 2.0 |
| (f) | 0.175 | 2.0 |

It should be understood that although this specification describes the embodiments in detail, not every embodiment contains only one independent technical solution. The description is for clarity, and those skilled in the art should consider the specification as a whole. The technical solutions in the various embodiments can be appropriately combined to form other embodiments that can be understood by those skilled in the art.

The detailed descriptions listed above are merely specific explanations of the feasibility of the embodiments of the present invention and are not intended to limit the protection scope of the present invention. Any equivalent implementation or modification made without departing from the spirit and scope of the present invention should be included within the protection scope of the present invention.

## Claims

1. A method for producing high carbon steel wire coil, wherein the carbon content of the wire coil is 0.8% and above by mass percentage, the method comprising:
smelting to obtain molten steel;
continuously casting the molten steel to obtain a continuous casting bloom, wherein soft reduction is performed on the continuous casting bloom during continuous casting, the soft reduction comprising: when the central solid fraction fs of the continuous casting bloom is 0.3≤fs<0.5, performing a reduction on the continuous casting bloom with a reduction rate of 3~5 mm/m, to form negative segregation in the center of the continuous casting bloom; when the central solid fraction fs of the continuous casting bloom is 0.5≤fs<0.8, reducing the reduction rate and performing a reduction on the continuous casting bloom with a reduction rate of 2~3 mm/m; when the central solid fraction fs of the continuous casting bloom is 0.8 ≤ fs<1, increasing the reduction rate and performing a reduction on the continuous casting bloom with a reduction rate of 4~6 mm/m;
heating the continuous casting bloom and then performing blooming to obtain a billet;
heating the billet and then performing rolling and air cooling to obtain the wire coil.

2. The method for producing high carbon steel wire coil according to claim 1, wherein when the central solid fraction fs of the continuous casting bloom is 0.3≤fs<0.5, performing a reduction on the continuous casting bloom with a reduction rate of 3~5 mm/m to form negative segregation in the center of the continuous casting bloom, specifically comprising:
when the central solid fraction fs of the continuous casting bloom is 0.3≤fs<0.5, performing a multi-stage reduction on the continuous casting bloom within the range of a reduction rate of 3~5 mm/m, with the reduction rate gradually decreasing, to form negative segregation in the center of the continuous casting bloom.

3. The method for producing high carbon steel wire coil according to claim 2, wherein the soft reduction on the continuous casting bloom during continuous casting specifically comprises:
performing soft reduction on the continuous casting bloom in the horizontal section of the continuous casting machine by sequentially passing the continuous casting bloom through eight withdrawal straighteners, wherein the eight withdrawal straighteners are numbered from one to eight, and when the central solid fraction fs of the continuous casting bloom is 0.3≤ fs<0.5, performing reduction on the continuous casting bloom through the first to the third withdrawal straighteners, with the reduction rate of the first to the third withdrawal straighteners controlled to decrease sequentially; when the central solid fraction fs of the continuous casting bloom is 0.5≤fs<0.8, performing reduction on the continuous casting bloom through the fourth to the sixth withdrawal straighteners; when the central solid fraction fs of the continuous casting bloom is 0.8≤fs≤1, performing reduction on the continuous casting bloom through the seventh and the eighth withdrawal straighteners.

4. The method for producing high carbon steel wire coil according to claim 3, wherein the reduction rate of the first withdrawal straightener is controlled to be 4~5 mm/m, the reduction rate of the second withdrawal straightener is controlled to be 3~5 mm/m, the reduction rate of the third withdrawal straightener is controlled to be 3~4 mm/m, the reduction rate of the fourth to the sixth withdrawal straighteners is controlled to be 2~3 mm/m, and the reduction rate of the seventh and the eighth withdrawal straighteners is controlled to be 4~6 mm/m.

5. The method for producing high carbon steel wire coil according to claim 1, wherein the step of continuously casting the molten steel to obtain a continuous casting bloom further comprises:
performing electromagnetic induction heating on the molten steel in the tundish, with the superheat controlled to be 10~20°C, and after the molten steel enters the mould through the tundish, performing electromagnetic stirring with a stirring current controlled to be 400~600A and a frequency of 3~5Hz.

6. The method for producing high carbon steel wire coil according to claim 1, wherein the step of continuously casting the molten steel to obtain a continuous casting bloom further comprises:
performing continuous casting using a continuous casting machine with a cross-sectional size of 300mm × 400mm, with the casting speed controlled to be 0.65~0.75 m/min, and the specific water ratio in the secondary cooling zone of the continuous casting machine controlled to be 0.15~0.25 L/kg.

7. The method for producing high carbon steel wire coil according to claim 1, further comprising, after continuously casting the molten steel to obtain a continuous casting bloom:
after obtaining the continuous casting bloom by continuous casting, loading the continuous casting bloom with a surface temperature greater than 800°C into a holding pit and holding for more than 72 hours.

8. The method for producing high carbon steel wire coil according to claim 1, wherein the step of heating the continuous casting bloom and then performing blooming to obtain a billet specifically comprises:
heating the continuous casting bloom in a heating furnace, with the soaking zone temperature in the heating furnace controlled to be 1130~1180°C, and the time in the furnace of the continuous casting bloom controlled to be 240~300 min.

9. The method for producing high carbon steel wire coil according to claim 1, wherein the step of heating the billet and then performing rolling and air cooling treatment to obtain the wire coil specifically comprises:
heating the billet in a heating furnace before rolling, with the soaking zone temperature in the heating furnace controlled to be 1080~1120°C, controlling the temperature of the billet at the entry of the finishing mill to be 860~890°C, controlling the water box pressure in the finishing mill to be 3~4 bar, controlling the water flow rate to be 1100~1200 m³/h, controlling the winding temperature to be 840~850°C, and rolling the billet to obtain a wire coil with a diameter of 5.0~5.5 mm.

10. The method for producing high carbon steel wire coil according to claim 9, wherein the step of heating the billet and then performing rolling and air cooling to obtain the wire coil further comprises:
after rolling, turning on the first to the third fans to cool the wire coil, with the air volume of the fans controlled to be 30~100%.

11. The method for producing high carbon steel wire coil according to claim 1, wherein the step of smelting to obtain molten steel specifically comprises:
sequentially performing hot metal pre-desulfuration, BOF smelting or electric furnace smelting, and LF furnace refining to obtain molten steel.

12. A high carbon steel wire coil, wherein the wire coil is manufactured by the method according to any one of claims 1 to 11.

13. The high carbon steel wire coil according to claim 12, wherein when the carbon content of the wire coil is 0.8~0.9% by mass percentage, the network cementite rating within the wire coil is 0 under the YB-T4002-2013 standard, and when the carbon content of the wire coil is more than 0.9% by mass percentage, the network cementite rating within the wire coil is 1 under the YB-T4002-2013 standard.
